# DEMANDE DE BREVET EUROPEEN

(11) **EP 1 079 505 A1**
(43) Date de publication de la demande: **28.02.2001**
(21) Numéro de dépôt: 99115822.1
(22) Date de dépôt: 11.08.1999
(51) Int. Cl.: H02K 51/00, B60K 6/04

(54) **Transmission électromagnétique à variation continue**

(71) Demandeur: The Swatch Group Management Services AG, 2501 Biel (CH)
(72) Inventeur: Lisowski, Leszek, 2000 Neuchatel (CH)
(74) Mandataire: Laurent, Jean

(57) **Abrégé**

La transmission électromagnétique à variation continue comporte une machine dynamoélectrique (3) de type sans collecteur, pourvue d'un arbre d'entrée (2) et d'un arbre de sortie (4), et des moyens (20) de commande et d'alimentation électrique à fréquence variable de ladite machine. La machine dynamoélectrique comporte un stator (16), un premier rotor (12) lié à l'arbre d'entrée, et un second rotor (15) lié à l'arbre de sortie et agencé pour interagir avec le premier rotor et avec le stator. La transmission est caractérisée en ce que la machine dynamoélectrique est de type à flux axial, les deux rotors et le stator étant formés par des éléments discoïdes. Une telle transmission est utilisable notamment dans un véhicule à propulsion hybride.

## Description

La présente invention concerne une transmission électromagnétique à variation continue, comportant une machine dynamoélectrique de type sans collecteur, pourvue d'un arbre d'entrée et d'un arbre de sortie, et des moyens de commande et d'alimentation électrique à fréquence variable de ladite machine, la machine dynamoélectrique comportant :
un premier rotor lié à l'arbre d'entrée;
un second rotor lié à l'arbre de sortie;
et un ensemble statorique pourvu d'enroulements raccordés aux moyens de commande et d'alimentation et agencé pour interagir avec les deux rotors au moyen de flux magnétiques à travers des entrefers.

Des transmissions électromagnétiques à variations continue comportant deux rotors qui coopèrent donc avec un stator commun ont déjà été proposés avant 1920 sous la forme de machines à collecteurs, en particulier des machines à courant continu. Voir par exemple les brevets US 1,392,349 et US 1,515,322, qui décrivent des machines à flux axial, et le brevet US 1,493,853 qui décrit une machine à flux radial ayant deux rotors concentriques à l'intérieur d'un stator unique. Toutefois, ces machines à collecteur ont une construction compliquée et nécessitent beaucoup d'entretien, de sorte qu'elles n'ont pas rencontré de succès commercial.

Depuis quelles années, il existe un regain d'intérêt pour des transmissions électromagnétiques de ce genre, parce que les progrès de l'électronique de puissance permettent de les alimenter à une fréquence variable, déterminée en fonction des vitesses respectives des arbres et en fonction des flux de puissance désirés, et de les réaliser sous la forme de machine sans collecteur, par exemple de machines synchrones à aimants permanents.

Les demandes de brevet GB 2 278 242, EP 0 725 474, EP 0 771 687, EP 0 828 340 et EP 0 866 544 décrivent différentes configurations de telles transmissions à variation continue. Toutes les configurations décrites dans ces documents concernent des machines à champ radial, c'est-à-dire que les rotors et les stators ont une forme générale cylindrique, mais on peut distinguer deux catégories de machines dynamoélectriques, ces machines étant parfois appelées "machines complexes" parce qu'elles comportent deux rotors et au moins deux ensembles d'enroulements entre lesquels de l'énergie électrique peut se transmettre via les moyens de commande.

Dans la première catégorie, le premier rotor lié à l'arbre d'entrée coopère avec le second rotor lié à l'arbre de sortie, l'un des rotors étant disposé autour de l'autre à la manière du stator d'une machine électrique traditionnelle. Ceci constitue un accouplement électromagnétique entre les deux arbres. L'autre partie de la machine constitue un moteur auxiliaire, généralement formé d'un stator actif et d'une partie rotorique passive solidaire de l'arbre de sortie. Ce moteur peut être alimenté par de l'énergie électrique produite dans la première partie de la machine, fonctionne en génératrice. Un inconvénient particulier de cette construction réside dans la longueur importante de la machine dynamoélectrique.

La seconde catégorie de la configuration se caractérise par le fait que les deux rotors et le stator sont concentriques, de sorte que le champ magnétique passe radialement à travers les deux entrefers cylindriques séparant ces trois éléments. Cette configuration rend la machine dynamoélectrique plus compact, mais elle crée des difficultés concernant le maintien d'une position précise des trois éléments l'un par rapport à l'autre, le raccordement électrique polyphasé du rotor intérieur, est surtout le refroidissement des deux rotors.

La présente invention vise à créer une transmission électromagnétique à variation continue qui permet d'éviter substantiellement les inconvénients susmentionnés.

A cet effet, l'invention concerne une transmission électromagnétique du genre indiqué en préambule, caractérisée en ce que la machine dynamoélectrique est de type à flux axial, les deux rotors et l'ensemble statorique étant formés par des éléments discoïdes.

L'utilisation d'élément discoïde offre en particulier un accès aisé au niveau de chaque arbre à partir du stator, ce qui permet de réaliser aisément les raccordements électriques d'alimentation sur des bagues tournantes fixées à l'arbre, ainsi que d'assurer la distribution d'un fluide de refroidissement jusqu'au coeur de la machine.

De plus, la forme discoïde des éléments permet une grande liberté de dimensions et d'agencements des éléments, par exemple en groupant plusieurs éléments modulaires sur un même arbre pour augmenter la puissance de la machine, ou en utilisant des éléments de différents diamètres ou de différents types dans la même machine. Un autre avantage est de permettre aisément de faire varier la largeur d'un entrefer, par un déplacement axial d'un élément discoïde, afin de réaliser un affaiblissement de champ qui élargit la plage de vitesses et permet d'optimiser le fonctionnement de la machine. Ceci est pratiquement impossible avec des rotors de formes cylindriques. Enfin, la forme discoïde des éléments des rotors permet de réaliser sans grande difficulté un couplage mécanique direct entre les rotors, selon un principe prévu dans le document EP 0 866 544 dans le cas d'une machine à configuration cylindrique.

D'autres caractéristiques et avantages de la présente invention apparaîtront dans la description suivante de différentes formes de réalisation préférées, présentées uniquement à titre d'exemples non limitatifs, en référence aux dessins annexés, dans lesquels :
- la figure 1 représente schématiquement un ensemble de traction hybride pour un véhicule automobile, comportant une transmission magnétique à variation continue selon l'invention,
- la figure 2 représente, en perspective partiellement coupée, différents types d'éléments discoïdes pouvant être utilisés dans une transmission électromagnétique selon l'invention,
- les figures 3 à 7 représentent schématiquement en coupe axiale différentes combinaisons possibles, parmi bien d'autres, d'éléments discoïdes dans une transmission électromagnétique selon l'invention,
- la figure 8 représente schématiquement en coupe axiale une forme de réalisation particulière d'une partie de la machine dynamoélectrique, comportant des moyens de déplacement pour modifier deux entrefers entre des éléments des deux rotors, et
- la figure 9 représente schématiquement en coupe axiale une autre forme de réalisation particulière d'une partie de la machine dynamoélectrique, comportant des moyens d'accouplement pour lier en rotation le premier rotor au second rotor.

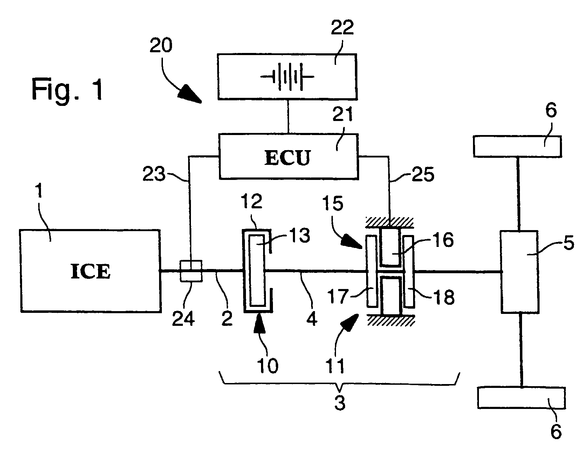

Dans le système de traction hybride représenté à la figure 1, un moteur thermique 1, par exemple un moteur à combustion interne (ICE), entraîne directement l'arbre d'entrée 2 d'une transmission électromagnétique à variation continue 3, dont l'arbre de sortie 4 entraîne, via un différentiel 5, les roues 6 d'un ou plusieurs essieux moteurs du véhicule. Pour la compréhension du fonctionnement de la machine dynamoélectrique 3, on peut considérer qu'elle comprend deux parties 11 et 12 pouvant constituer chacune une machine électrique sans collecteur, cette machine pouvant fonctionner en moteur ou en générateur. La première partie 10 comporte un premier rotor 12, lié à l'arbre d'entrée 2, et un élément de rotor 13 lié à l'arbre de sortie 4 et faisant partie d'un second rotor 15 qui est commun aux deux parties 10 et 11 de la partie 3.

La seconde partie 11 de la machine 3 comporte un stator 16 qui coopère, dans le cas présent avec deux éléments rotoriques 17 et 18 liés à l'arbre de sortie 4. Tous les éléments rotoriques et statoriques 12, 13, 16, 17 et 18 sont des éléments discoïdes, présentant entre eux des entrefers qui s'étendent dans des plans radiaux et dans lesquels le flux magnétique a une direction axiale. Toutefois, il n'est pas exclu que le flux ait une direction radiale dans certaine partie de la machine, par exemple dans l'entrefer circonférentiel entre les éléments 12 et 13, comme on l'expliquera plus loin.

Dans la figure 1, on a dessiné en traits gras les éléments discoïdes qui sont actifs, c'est-à-dire ayant des enroulements raccordés à des moyens de commande et d'alimentation 20, tandis que les éléments réactifs tels que 13, 17 et 18 sont représentés en traits fins. Les moyens de commande et d'alimentation sont représentés très schématiques dans le dessin sous la forme d'une unité électronique de commande (ECU 21) reliée à une batterie d'accumulateur 22. Ces moyens ne seront pas décrits en détail ici, car ils peuvent être réalisés de manière connue. Le lecteur pourra se référer à ce sujet en particulier aux demandes de brevet européens citées plus haut. Mentionnant simplement que l'unité 21 contient de préférence deux convertisseurs AC/DC polyphasés reliés l'un à l'autre et à la batterie 22 par un réseau à courant continu, l'un de ces convertisseurs étant raccordés au premier rotor 12 par une liaison polyphasée 23 et un dispositif de bagues de contact 24 placées sur ce rotor ou sur l'arbre d'entrée 2, tandis que le second convertisseur est raccordé au stator 16 par une liaison polyphasée 25.

Sachant que les deux éléments actifs (le premier rotor 12 et le stator 16 dans l'exemple de la figure 1) peuvent fonctionner dans deux états, à savoir un état moteur et un état générateur, et qu'ils sont associés à deux convertisseurs à fréquences et amplitudes réglables et une batterie, il est possible de commander de manière appropriée l'alimentation des éléments actifs au moyen des convertisseurs afin d'obtenir les différences de vitesses voulues entre les rotors et le stator, et de réaliser facilement et d'optimiser l'échange d'énergie entre les arbres d'entrée et de sortie dans les deux sens. Cette constatation justifie la dénomination "à variation continue" de la transmission selon l'invention.

Le nombre des phases est supérieur ou égal à deux et il est de préférence égal à trois.

On notera que chacune des deux parties de machine 10 et 11 peut être, à choix de type asynchrone, ou de type synchrone à aimants permanents. Chacune d'elle peut comporter un nombre quelconque d'éléments discoïdes, en fonction des dimensions disponibles du point de vue du diamètre et de la longueur axiale de la machine 3.

D'autre part, il importe de noter que les deux parties 10 et 11 de la machine 3 peuvent en réalité être groupées étroitement de façon que le flux magnétique les traverse axialement d'un bout à l'autre de la machine.

On notera aussi que la liaison polyphasée 23 pourrait se faire sur l'arbre de sortie 4 au lieu de l'arbre d'entrée 2, si c'est l'élément 13 qui est actif au lieu du premier rotor 12.

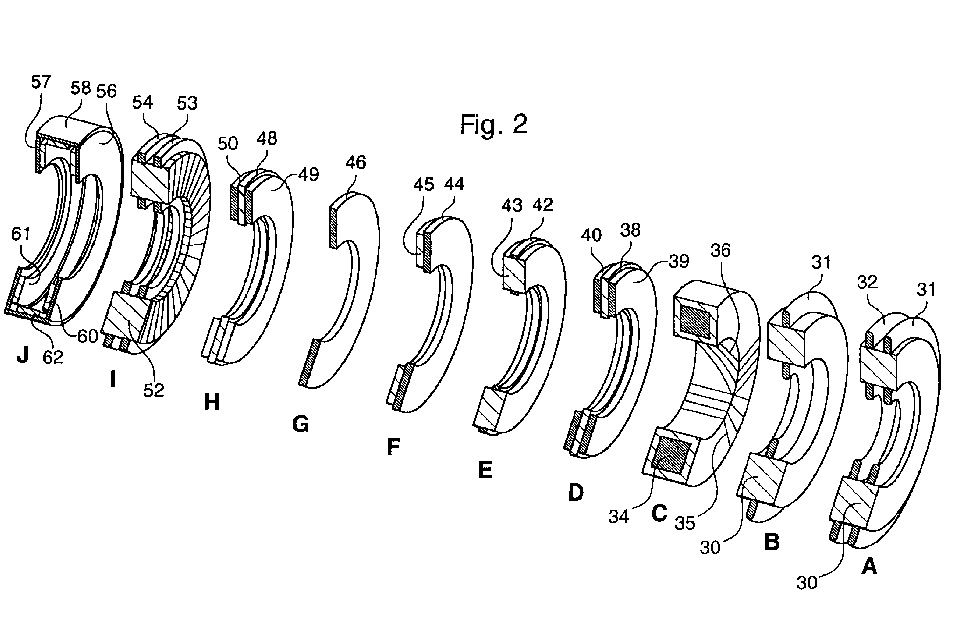

La figure 2 représente différents types A à J d'éléments discoïdes utilisables pour former les rotors 12 et 15 et le stator 16 définis plus haut. Chaque rotor ou stator peut comporter un ou plusieurs de ces éléments, de même type ou de type différent selon les cas. Les éléments des types A, B et C sont des éléments actifs, tandis que ceux des types D à J sont des éléments réactifs.

L'élément de type A comporte un noyau annulaire ferromagnétique 30 portant deux bobinages polyphasés 31 et 32 s'étendant chacun dans un plan radial, c'est-à-dire perpendiculaire à l'axe de rotation de la machine. Les enroulements des bobinages 31 et 32 sont formés de spires dont les tronçons de conducteur actifs passent dans des encoches radiales, fermées ou non latéralement du noyau 30.

L'élément du type B est semblable à celui du type A, mais ne comporte qu'un seul bobinage 31.

L'élément de type C a un noyau 34 qui peut être ferromagnétique ou non. Sur ce noyau peuvent être classées deux formes de bobinage, à choix : un bobinage 35 dont les spires s'étendent dans des plans axiaux ou un bobinage 36 ayant des spires inclinées dont les deux côtés radiaux sont décalés d'un pas polaire du bobinage.

Les éléments des types D, E et F sont des éléments à aimants permanents, donc du type synchrone. Leur noyau peut être ferromagnétique ou non.

L'élément de type D possède un noyau 38 sur les deux phases duquel sont fixées des rangées circulaires d'aimants permanents 39 et 40. Par contre, dans l'élément de type E, le noyau 42 est traversé par les aimants permanents 43. Dans le cas du type F le noyau 44 porte des aimants permanents 45 sur une seule de ses faces. Un tel élément est utilisé avec un noyau ferromagnétique s'il doit fermer les lignes de champ en bout de ligne. Si au contraire son noyau n'est pas ferromagnétique, il sera simplement traversé axialement par le flux magnétique.

L'élément de type G est constitué d'un simple disque ferromagnétique 46 servant à fermer les lignes de champ en direction circonférentielle ou à faire passer axialement le flux magnétique entre deux autres éléments discoïdes.

Les éléments des types H et I sont de type asynchrone. Dans le type H, un noyau ferromagnétique 48 porte sur chacune de ses faces une couche conductrice 49, 50, par exemple en aluminium ou en cuivre, pour former un induit. Un élément du même genre (non représenté) peut n'avoir une couche conductrice que sur une seule de ses faces.

L'élément de type I a un noyau ferromagnétique 52 portant un bobinage en court-circuit du type à cage, ou plus exactement deux de ces bobinages 53 et 54 dans le cas présent. Chaque bobinage 53, 54 est disposé dans un plan radial et traverse le noyau 52 dans des encoches radiales qui peuvent être ouvertes ou fermées. L'élément de type I sera de préférence à une seule cage lorsqu'il s'agit d'un élément terminal, pour fermer les lignes de champ, et de préférence à double cage si le flux magnétique doit le traverser axialement.

L'élément de type J est un élément discoïde à profil en C, c'est-à-dire que son noyau comprend deux disques annulaires 56 et 57 reliés par une pièce tubulaire 58. On notera que le profil en C peut être ouvert vers l'intérieur, comme le montre la figure 2, ou vers l'extérieur pour encadrer un disque annulaire de plus grand diamètre. Chacune des trois parties 56 à 58 du noyau est recouverte, du côté de l'intérieur du profil en C, d'aimants permanents 60, 61 et 62 pour constituer un élément de type synchrone. Toutefois, cet élément pourrait être conçu sous la forme asynchrone, en remplaçant les aimants 60 à 62 par des couches conductrices analogues aux couches 49 et 50 de l'élément de type H.

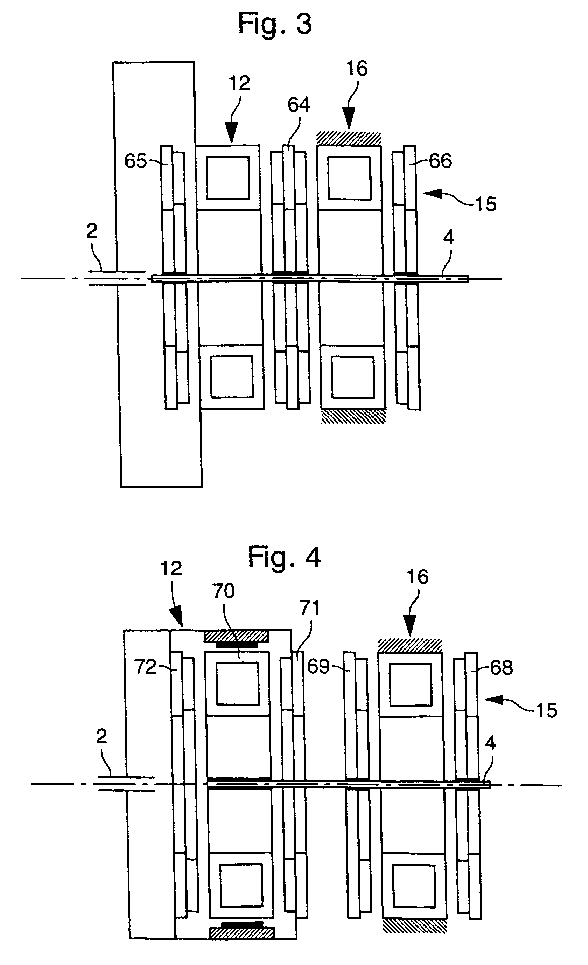

Les figures 3 à 7 montrent divers exemples de possibilités de combiner certains des éléments discoïdes représentés à la figure 2 dans la machine dynamoélectrique 3 représentée à la figure 1.

Selon la figure 3, le premier rotor 12 lié à l'arbre d'entrée 2 comporte un élément actif de type A ou C. Le stator 16 comporte aussi un élément actif de type A ou C. Le rotor 15 lié à l'arbre de sortie 4 est formé d'éléments réactifs comprenant un élément central 64 traversé par le flux entre le stator 16 et le premier rotor 12, et deux éléments terminaux 65 et 66 pourvus d'un noyau ferromagnétique pour fermer les lignes de champ. Dans une version asynchrone, l'élément 64 peut être du type I, et les éléments 65 et 66 du type H monoface. Dans une version synchrone, l'élément 64 peut être de type D ou E, et les éléments 65 et 66 du type F à noyau ferromagnétique.

Selon la figure 4, le stator 16 est encore formé par un élément actif de type A ou C encadré par deux éléments réactifs 68 et 69 faisant partie du second rotor 15 et ayant des noyaux magnétiques pour fermer les lignes de champ. Ces éléments peuvent être du type H monoface dans les cas asynchrone, ou du type F dans le cas synchrone. L'autre élément actif est un élément 70 de type A ou C appartenant au second rotor 15 et encadré par deux éléments 71 et 72 du premier rotor 12. Ces derniers peuvent être de l'un des types mentionnés ci-dessus pour les éléments 68 et 69.

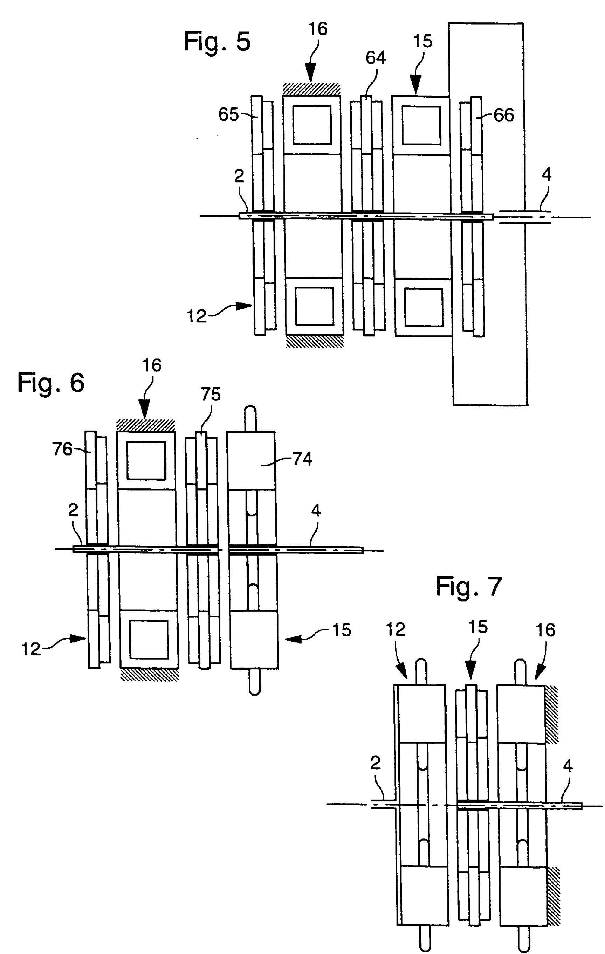

L'agencement selon la figure 5 est semblable à celui de la figure 3, sauf que les rôles des deux arbres 2 et 4 et des deux rotors 12 et 15 sont inversés. Les éléments discoïdes peuvent donc être les mêmes que dans la figure 3.

Selon la figure 6, le stator 16 est toujours constitués comme dans les exemples précédents, tandis que l'autre élément actif 74 fait partie de second rotor 15 et peut être du type B. Le premier rotor 12 comporte un élément central 75, traversé par le flux entre le stator et l'élément 74, et un élément terminal 76. Ces éléments 75 et 76 peuvent être des mêmes types que les éléments 64 et 65 représentés à la figure 3.

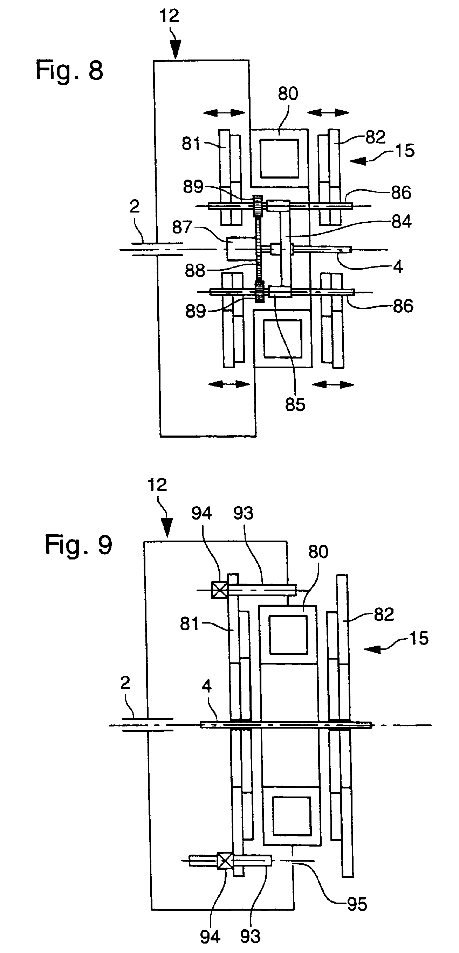

Enfin, dans l'exemple de la figure 7, le stator 16 et le premier rotor 12 sont formés chacun par un élément actif terminal du type B, et le second rotor placé entre eux est formé d'un élément réactif traversé axialement par le flux, notamment de type E ou I, ou doté d'un noyau ferromagnétique pou fermer les lignes de champ, notamment de type D ou H.

Dans la forme de réalisation particulière illustrée par la figure 8, le premier rotor 12 comporte un élément discoïde actif 80 fixé à l'arbre d'entrée 2 et encadré de manière symétrique par deux éléments discoïdes réactifs 81 et 82 du second rotor 15, éléments qu'on peut déplacer axialement comme l'indiquent les flèches. L'arbre de sortie 4 est muni d'un support central 84 comportant des paliers 85 dans lesquels deux ou plusieurs vis axiales 86 sont montées de manière librement rotative. Les vis 86 ont, de part et d'autre de leur palier 85, des filetages de sens opposés qui sont engagés dans des trous filetés des deux éléments 81 et 82 pour supporter ceux-ci et déterminer leur écartement qui peut varier par une rotation synchronisée des vis. Dans ce but, l'arbre 4 est muni d'un petit moteur électrique 87 entraînant une roue dentée centrale 88 qui attaque des pignons 89 fixés aux vis 86.

Grâce à ce mécanisme qui peut être commandé par une unité électronique de gestion de la transmission, il est possible de créer avantageusement un affaiblissement de champ dans les entrefers symétriques 90 et 91 entre l'élément 80 et les éléments réactifs 81 et 82, par exemple pour maintenir une différence voulue entre la tension d'alimentation et la tension induite dans une grande partie de la plage des vitesses, en particulier les grandes vitesses.

En outre, le même mécanisme permet d'accoupler mécaniquement (par friction ou de manière positive) les deux rotors par serrage de l'élément 80 entre les éléments 81 et 82, pour transmettre en prise directe le couple de l'arbre d'entrée 2 à l'arbre de sortie 4 ou vice versa. Au préalable, l'alimentation électrique de l'élément actif 80 aura été mise à une fréquence nulle afin de synchroniser les vitesses des deux rotors. Cette synchronisation peut s'effectuer pendant que la transmission fonctionne en charge.

Un autre moyen de couplage direct par accouplement positif entre les deux rotors 12 et 15 est représenté schématiquement à la figure 9. Dans cet exemple, l'élément discoïde 81 du second rotor 15 porte plusieurs tiges 93 susceptibles de coulisser axialement dans cet élément sous l'action d'électroaimants respectifs 94 pour s'engager dans des trous 95 du premier rotor 12 à la manière de crabots. Pour simplifier le dessin, la tige supérieure est représentée engagé tandis que l'autre ne l'est pas, mais bien entendu elles occupent en réalité la même position en même temps. Là aussi, l'alimentation électrique de l'élément actif 80 aura d'abord été mise à une fréquence nulle afin de synchroniser les vitesses des deux rotors avant l'accouplement.

## Revendications

1. Transmission électromagnétique à variation continue, comportant une machine dynamoélectrique (3) de type sans collecteur, pourvue d'un arbre d'entrée (2) et d'un arbre de sortie (4), et des moyens (20) de commande et d'alimentation électrique à fréquence variable de ladite machine, la machine dynamoélectrique comportant :
un premier rotor (12) lié à l'arbre d'entrée;
un second rotor (15) lié à l'arbre de sortie;
et un ensemble statorique (16) pourvu d'enroulements raccordés aux moyens de commande et d'alimentation et agencé pour interagir avec les deux rotors au moyen de flux magnétiques à travers des entrefers, la transmission étant caractérisée en ce que la machine dynamoélectrique est de type à flux axial, les deux rotors et l'ensemble statorique étant formés par des éléments discoïdes (A-J).

2. Transmission selon la revendication 1, caractérisée en ce que les éléments discoïdes comprennent au moins deux éléments actifs, pourvus d'enroulements connectés aux moyens de commande et d'alimentation, et au moins un élément réactif.

3. Transmission selon la revendication 2, caractérisée en ce que ledit au moins un élément réactif comprend au moins un élément de type synchrone à aimants permanents.

4. Transmission selon la revendication 2, caractérisée en ce que ledit au moins un élément réactif comprend au moins un élément de type asynchrone.

5. Transmission selon la revendication 1, caractérisée en ce que le premier rotor comporte au moins deux éléments discoïdes.

6. Transmission selon la revendication 1 ou 5, caractérisée en ce que le second rotor comporte au moins deux éléments discoïdes.

7. Transmission selon la revendication 5 ou 6, caractérisée en ce que l'ensemble statorique comporte au moins deux éléments discoïdes.

8. Transmission selon la revendication 1, caractérisée en ce qu'elle comporte des moyens de déplacement pour déplacer axialement au moins un des éléments discoïdes pour modifier la largeur de l'entrefer axial entre cet élément et un élément discoïde adjacent.

9. Transmission selon la revendication 1, caractérisée en ce qu'elle comporte des moyens d'accouplement pour lier en rotation un élément discoïde du premier rotor à un élément discoïde du second rotor.

10. Transmission selon les revendications 8 et 9, caractérisée en ce que lesdits moyens d'accouplement comprennent lesdits moyens de déplacement, la liaison entre les deux rotors étant réalisée par contact desdits éléments discoïdes respectifs du premier et du second rotor.
